# FASCICULE DE BREVET EUROPEEN

(11) **EP 3 635 349 B1**
(45) Date de publication et mention de la délivrance du brevet: **09.10.2024**
(21) Numéro de dépôt: 18730682.4
(22) Date de dépôt: 04.06.2018
(51) Int. Cl.: G01J 3/02, G01J 3/10, G01J 3/42, G01N 21/17

(54) **SYSTÈME SPECTROPHOTOMÈTRE**
SPEKTROPHOTOMETERSYSTEM
SPECTROPHOTOMETER SYSTEM

(30) Priorité: 07.06.2017 FR 1755037
(43) Date de publication de la demande: 15.04.2020
(73) Titulaire: Commissariat à l'Énergie Atomique et aux Énergies Alternatives, 75015 Paris (FR)
(72) Inventeur: GRATEAU, Henri, 38054 Grenoble Cedex 9 (FR); HUE, Jean, 38054 Grenoble Cedex 9 (FR)
(74) Mandataire: INNOV-GROUP
(86) Numéro de dépôt international: PCT/EP2018/064577
(87) Numéro de publication internationale: WO 2018/224425

(56) Documents cités:
- WO-A2-2006/076353
- US-A1- 2004 239 922
- US-A1- 2007 051 883
- US-A1- 2013 020 480
- US-A1- 2013 265 568

## Description

### Domaine technique de l'invention

La présente invention se rapporte à un système de type spectrophotomètre présentant notamment une architecture particulièrement compacte, tout en conservant des niveaux de fidélité et de répétabilité élevés.

### Etat de la technique

Un système spectrophotomètre mesure l'absorbance d'une solution à une longueur d'onde donnée. Classiquement, un dispositif monochromateur permet de générer, à partir d'une source de lumière infrarouge, visible ou ultraviolette, une lumière monochromatique, dont la longueur d'onde est choisie par l'utilisateur. La lumière monochromatique incidente d'intensité donnée traverse alors une cuve contenant la solution étudiée, et le système mesure l'intensité de la lumière transmise. La valeur affichée par le spectrophotomètre est l'absorbance à la longueur d'onde étudiée. Le système spectrophotomètre peut être utilisé pour mesurer de manière instantanée une absorbance à une longueur d'onde donnée, ou pour produire un spectre d'absorbance (spectrophotomètre à balayage). Dans ce dernier cas, le dispositif monochromateur décrit en un temps court l'ensemble des longueurs d'onde comprises entre deux valeurs choisies par l'opérateur.

Les substrats analysés sont le plus souvent en solution, mais peuvent également être en phase gazeuse et à l'état solide.

La spectroscopie ultraviolet-visible ou spectrométrie ultraviolet-visible est une technique de spectroscopie mettant en jeu les photons dont les longueurs d'onde sont dans le domaine de l'ultraviolet (180 nm - 400 nm), du visible (400 nm - 750 nm) ou du proche infrarouge (750 nm - 1 400 nm).

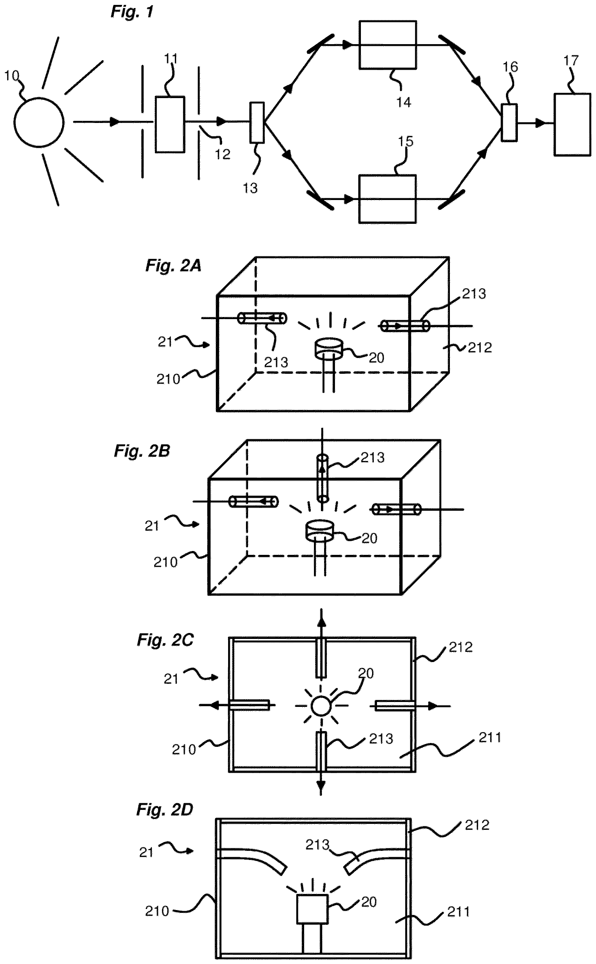

Un système spectrophotomètre UV-visible dit à double-faisceau tel que schématisé sur la figure 1 et détaillé ci-dessous consiste classiquement à utiliser des solutions optiques classiques pour envoyer une fraction de la lumière d'une source sur la voie de mesure et une autre fraction de la lumière de la source sur la voie de référence :
- Une source 10 ou des sources de lumière : lumière blanche pour la mesure dans le spectre visible (lumière polychromatique) et/ou lumière UV ;
- Un monochromateur 11 formé d'un réseau diffractant la lumière de la source. Il permet de sélectionner la longueur d'onde de la lumière qui traversera la solution à doser ;
- Une fente 12 de largeur fixe ou variable pour régler la bande passante ;
- Un élément 13 séparateur de faisceau ;
- Une cuvette 14 transparente de mesure dans laquelle on place la solution à étudier ;
- Une cuvette 15 transparente de référence contenant le solvant et le(s) réactif(s) ; Le solvant et le(s) réactif(s) utilisés n'étant pas toujours transparents, il est obligatoire de réaliser un "blanc" ou témoin de compensation, c'est-à-dire une mise à zéro du système, en ne plaçant que le solvant et le(s) réactif(s) utilisés dans cette cuvette de référence ;
- Un élément 16 rassembleur de faisceaux ;
- Un ou deux détecteurs 17 de type photodiode qui restitue un courant proportionnel au nombre de photons reçus. Sur des modèles récents, le détecteur de type photodiode est parfois remplacé par une barrette CCD, ou une barrette de diode (chaque cellule sensible reçoit une couleur fixe). Les modèles les plus sensibles utilisent un détecteur de type photomultiplicateur ou PMT ;

Les solutions de système spectrophotomètre connues présentent certains inconvénients :
- Ils ne sont pas, à la fois, compacts et performants, notamment en termes de fidélité et reproductibilité dans les mesures effectuées ;
- Ils permettent de ne réaliser qu'une seule mesure à la fois, ce qui limite les comparaisons fines entre échantillons ;
- Ils ne sont pas conçus pour donner une évolution temporelle de la transmission (c'est-à-dire de l'absorbance) ;
- Ils ne sont pas conçus pour comparer la transmission de plusieurs échantillons en statique ou en fonction du temps aux mêmes instants ;
- Compte tenu de leur volume, ils ne peuvent pas être embarqués dans des volumes réduits, comme par exemple dans une balise sous-marine ;
- Ils ne peuvent pas être couplés à un dispositif fluidique qui effectue des prélèvements en permanence ou à des instants donnés, par exemple pour suivre l'évolution d'une substance dans un plan d'eau ou d'un paramètre liquide chez un patient ;
- Ils ne sont pas adaptés à la réalisation d'une mesure angulaire de transmission sans mouvement ;
- Ils ne sont pas adaptés à la mise en oeuvre d'une cartographie en transmission ;
- Ils ne sont pas adaptés à mesurer des transmissions en fonctions d'angles d'incidence ;

Le document US2013/020480A1 décrit plusieurs architectures de spectrophotomètres dans lesquelles l'interaction entre le rayonnement émis par la source et les fibres est réalisée en employant un dispositif optique réalisant une séparation ("splitter") du faisceau émis par la source en deux rayonnements distincts, l'un pour le canal de mesure et l'autre pour le canal de référence. Cette solution n'est cependant pas satisfaisante car complexe à mettre en oeuvre et à régler.

Le but de l'invention est donc de proposer un système spectrophotomètre pouvant présenter une architecture particulièrement compacte, tout en étant particulièrement performant, notamment en termes de fidélité et de reproductibilité dans les mesures en transmission au cours du temps, en s'affranchissant des fluctuations de la source employée. Il s'agira également de proposer une architecture simple et parfaitement adaptée pour réaliser plusieurs mesures de transmissions simultanées et/ou d'examiner des variations de transmission entre les différents échantillons aussi bien en statique qu'en fonction du temps.

Grâce à la solution de l'invention, il sera également possible de réaliser la mesure de transmission optique des échantillons en utilisant la divergence des fibres optiques, sans aucun mouvement de composants optiques.

### Exposé de l'invention

Ce but est atteint par un système spectrophotomètre selon la revendication 1.

Dans le système de l'invention, l'interaction entre le rayonnement émis par la source et les fibres optiques est réalisée sans dispositif optique classique, c'est-à-dire sans redirection, sans focalisation, sans réalignement et sans séparation du rayonnement émis par la source (comme dans le document de l'état de la technique évoqué ci-dessus). Seule une diffusion du rayonnement lumineux peut être envisagée.

Les deux faisceaux présents dans les deux fibres optiques sont donc issus directement du rayonnement natif émis par la source. L'entrée de chaque fibre est "connectée" à la source de manière indépendante et en parallèle de chaque autre fibre, c'est-à-dire qu'elle reçoit une partie du rayonnement émis par la source de manière indépendante.

Par ailleurs, dans la solution revendiquée, chaque fibre optique est agencée de sorte que son entrée soit localisée à l'intérieur de l'espace interne de l'enveloppe. Il s'agit donc de rapprocher l'entrée de chaque fibre de la source afin d'obtenir le meilleur couplage optique possible. L'entrée de chaque fibre pourra être située à une distance (suivant l'axe de son entrée) de la source qui est inférieure à 10mm, préférentiellement inférieure à 5mm.

Selon une réalisation particulière, le système comporte une première unité de stockage intercalée entre ladite première fibre optique et le premier détecteur pour recevoir ledit premier faisceau et une deuxième unité de stockage intercalée entre ladite deuxième fibre optique et le deuxième détecteur pour recevoir ledit deuxième faisceau.

Selon une réalisation particulière, la première fibre optique et la deuxième fibre optique sont agencées pour présenter chacune un axe d'entrée, défini par la normale à leur face d'entrée, et en ce que l'axe d'entrée de la première fibre et l'axe d'entrée de la deuxième fibre ne sont pas confondus.

Selon une réalisation particulière, le système comporte un diffuseur optique positionné entre la sortie de chaque fibre optique et l'unité de stockage.

Selon une réalisation particulière, chaque détecteur comporte au moins une photodiode.

Selon une réalisation particulière, chaque détecteur est configuré et agencé pour capter une transmission angulaire à travers l'unité de stockage.

Selon une réalisation particulière, chaque détecteur est un détecteur de type CMOS ou CCD.

Selon l'invention, la source lumineuse comporte une ou plusieurs diodes électroluminescentes.

Selon une réalisation particulière, le système comporte des moyens de diffusion agencés au moins partiellement autour de ladite source lumineuse pour diffuser ledit rayonnement lumineux.

Selon une réalisation particulière, lesdits moyens de diffusion sont réalisés par dépolissage du capot transparent de chaque diode électroluminescente.

Selon une réalisation particulière, le système comporte une carte électronique sur laquelle est connectée chaque diode électroluminescente de la source lumineuse et chaque détecteur.

Selon une réalisation particulière, le système comporte une unité de détection à laquelle est connecté chaque détecteur.

Selon une réalisation particulière, l'enveloppe est de forme parallélépipédique.

Selon une réalisation particulière, le système comporte au moins une voie de mesure et une voie de référence.

L'invention concerne également l'utilisation du système tel que défini ci-dessus pour réaliser des mesures d'absorption ou de transmission optique à travers un échantillon à analyser placé dans une unité de stockage intercalée entre ladite sortie de la première fibre optique et le premier détecteur pour recevoir ledit premier faisceau.

### Brève description des figures

D'autres caractéristiques et avantages vont apparaître dans la description détaillée qui suit, faite en regard des dessins annexés listés ci-dessous :
- La figure 1 représente le principe de fonctionnement d'un système spectrophotomètre classique connu dans l'état de la technique ;
- Les figures 2A et 2B représentent le dispositif optique du système de l'invention, vu en perspective, selon deux modes de réalisation distincts ;
- La figure 2C représente le dispositif optique, en vue de dessus, selon un autre mode de réalisation ;
- La figure 2D représente le dispositif optique, en vue de côté, selon un autre mode de réalisation ;
- La figure 2E représente le dispositif optique, vu en perspective, selon un autre mode de réalisation ;
- La figure 3 représente le système spectrophotomètre de l'invention ;
- La figure 4 représente une variante de réalisation du système spectrophotomètre de l'invention en mesurant sans mouvement la transmission en fonction de l'angle ;
- La figure 5 illustre le principe de réalisation d'une cartographie de transmission à l'aide du système de l'invention ;

### Description détaillée d'au moins un mode de réalisation

L'architecture et le principe d'un système spectrophotomètre a déjà été décrit ci-dessus en liaison avec la figure 1.

Le système spectrophotomètre de l'invention est décrit ci-dessous en liaison avec les figures 2A à 5.

Le système spectrophotomètre de l'invention comporte au moins une source lumineuse 20 configurée pour émettre un rayonnement lumineux.

Le rayonnement lumineux est émis dans une gamme de longueur d'ondes située dans le domaine de l'ultraviolet (180 nm à 400nm) et/ou, du visible (400nm à 750nm) et/ou du proche infrarouge (750nm à 1400nm). La solution de l'invention n'embarque pas de monochromateur. Ainsi, c'est l'ensemble des longueurs d'onde incidentes qui traversera le ou les échantillons. Un filtrage optique peut être introduit pour réduire les longueurs d'onde d'utilisation.

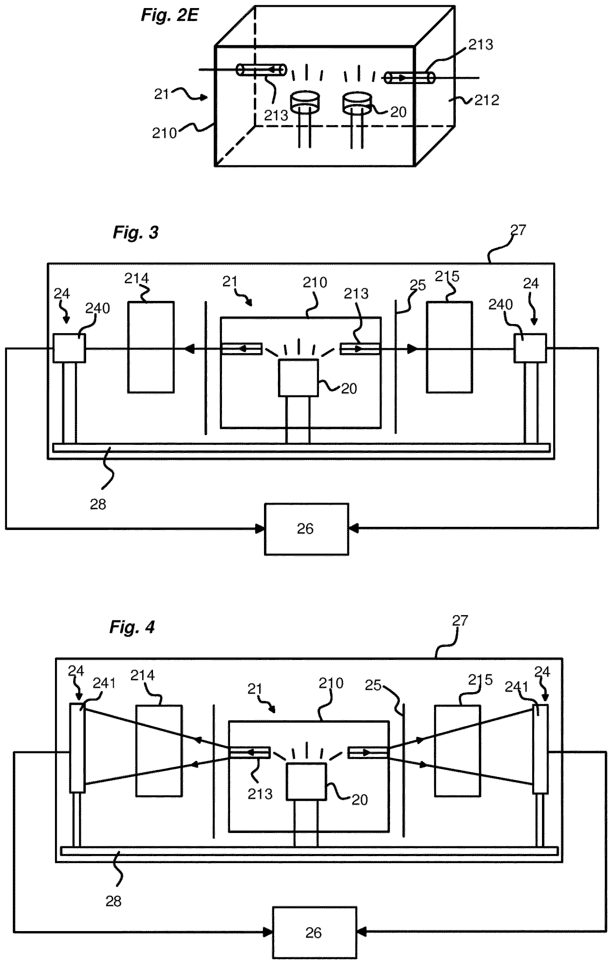

Chaque source lumineuse est formée d'une ou plusieurs diodes électroluminescentes. La figure 2E montre par exemple un système incluant une source composée de deux diodes électroluminescentes.

Le système spectrophotomètre comporte un dispositif optique 21.

Le dispositif optique 21 comporte une enveloppe 210, délimitant un espace interne 211 situé à l'intérieur de l'enveloppe et un espace externe situé à l'extérieur de l'enveloppe.

Dans la suite de la description, le rayonnement émis par la source dans ledit espace interne est dit natif, c'est-à-dire qu'il ne subit aucune transformation optique, hormis optionnellement une diffusion. L'enveloppe 210 ne renferme aucun autre dispositif optique de réalignement, focalisation ou redirection, tel que par exemple miroirs, prisme ou autres dispositifs du même type.

L'enveloppe 210 comporte une ou plusieurs parois 212 agencées entre elles pour délimiter ledit espace interne.

Les parois de l'enveloppe 210 sont opaques aux longueurs d'onde émises par la source lumineuse 20.

L'enveloppe peut être de forme parallélépipédique.

Chaque source lumineuse est placée dans l'espace interne délimité par l'enveloppe de manière à diffuser leur lumière à l'intérieur de l'enveloppe 210.

Le dispositif comporte au moins deux ouvertures formées à travers une ou plusieurs parois 212 opaques de l'enveloppe 210. Une première ouverture peut représenter une voie de mesure et une deuxième ouverture peut représenter une voie de référence.

De manière non limitative, les deux ouvertures peuvent être réalisées à travers deux parois opposées de l'enveloppe de forme parallélépipédique comme sur les figures annexées (figure 2A par exemple) ou selon toute autre agencement tenant compte de la forme de l'enveloppe.

Le dispositif optique 21 peut comporter plus de deux ouvertures réalisées à travers l'enveloppe. Chaque ouverture supplémentaire réalisée à travers l'enveloppe, en plus des deux ouvertures évoquées ci-dessus, représente une voie de mesure ou de référence supplémentaire.

Pour chaque ouverture, le dispositif optique 21 comporte une fibre optique 213 agencée à travers l'ouverture pour guider un faisceau lumineux distinct issu du rayonnement lumineux émis par la source 20.

Chaque fibre optique s'étend sans interruption de l'espace interne vers l'espace externe. Les deux fibres optiques récupèrent chacune directement (sans dispositif optique intermédiaire de type lentille ou autre) et de manière indépendante une partie du rayonnement natif émis par la source.

Le diamètre externe de la fibre optique 213 est adapté au diamètre de l'ouverture dans laquelle la fibre est engagée.

Chaque fibre optique 213 peut présenter une longueur (suivant son axe) de 10 mm et un diamètre de 1 mm.

Chaque fibre optique 213 peut présenter une ouverture numérique de 0.5.

Chaque fibre optique comporte une première extrémité formant son entrée débouchant dans l'espace interne de l'enveloppe et une deuxième extrémité formant sa sortie débouchant dans l'espace externe en direction des échantillons dont la transmission est à évaluer. Chaque fibre optique présente son entrée positionnée à quelques millimètres de la source, à une distance inférieure à 10mm, préférentiellement inférieure à 5mm. La sortie de la fibre optique pointe pour sa part en direction du détecteur de la voie considérée. L'entrée de chaque fibre optique est ainsi localisée à l'intérieur de l'espace interne où est émis le rayonnement natif.

Les fibres optiques 213 peuvent être agencées à travers l'enveloppe de manière à éviter tout phénomène de perturbations optiques entre elles. Il s'agira par exemple de ne pas positionner deux voies à 180° l'une de l'autre, de manière à éviter toute perturbation par réflexion optique. Autrement dit, les axes d'entrée des fibres optiques, définies par leurs normales aux faces d'entrée, ne devront pas être confondus.

De manière avantageuse, la source lumineuse 20 et chaque fibre optique 213 sont agencées l'une par rapport à l'autre de manière à favoriser un couplage optique entre les deux éléments. Autrement dit, chaque fibre optique 213 est positionnée par rapport à la source lumineuse 20 pour recevoir une lumière maximale. Pour une fibre qui présente un coeur de 1mm, seulement quelques centièmes de la lumière émise par la source sont introduits dans la fibre.

L'entrée de chaque fibre optique 213 débouche avantageusement dans le cône d'émission de la source lumineuse, en tenant compte de l'ouverture numérique de la fibre et du diagramme d'émission de la source lumineuse.

Le dispositif optique 21 peut comporter des moyens de diffusion optiques positionnés sur la source ou autour de la source lumineuse pour diffuser le rayonnement émis, permettant ainsi d'uniformiser la zone de l'échantillon éclairé.

Les moyens de diffusion optiques sont placés dans l'espace interne délimité par l'enveloppe du dispositif.

Les moyens de diffusion optiques peuvent être réalisés selon plusieurs variantes de réalisation prises seules ou en combinaison :
- Les moyens de diffusion peuvent être un dépoli positionné de manière adaptée par rapport à la source lumineuse.
- Les moyens de diffusion sont par exemple un contenant dans laquelle est placée la source lumineuse et comprenant une paroi dépolie à travers laquelle le rayonnement lumineux peut être émis.
- La surface du bloc transparent de chaque diode électroluminescente peut être dépolie de manière à former lesdits moyens de diffusion.

Le bloc transparent de chaque diode électroluminescente peut être coupé à son extrémité pour donner à la diode électroluminescente une forme tronquée sur sa partie supérieure, de manière à favoriser le couplage optique avec les fibres optiques qui seront décrites ci-dessous.

Les moyens de diffusion optiques évoqués ci-dessus sont destinés à favoriser le couplage de la lumière entre la source et chaque fibre optique, c'est-à-dire à maximiser la quantité de lumière qui pénètre dans chaque fibre et donc à améliorer l'uniformité d'éclairement sur l'échantillon et sur chaque détecteur mais également à uniformiser spatialement la lumière incidente. La fibre optique possédant une ouverture numérique, c'est-à-dire un angle d'acceptance, seuls les rayons situés dans cet angle d'acceptance pénètrent dans la fibre 213.

Chaque fibre optique 213 peut être recourbée à une extrémité de manière à favoriser le couplage optique avec la source lumineuse 20 (figure 2D).

Le dispositif optique 21 peut comporter, agencées à travers l'enveloppe 210, deux fibres optiques (figure 2A), trois fibres optiques (figure 2B), quatre fibres optiques (figure 2C) ou plus. L'utilisation de fibres en lieu et place de trous permet notamment une meilleure uniformisation du rayonnement incident mais aussi de s'affranchir du phénomène de sténopé qui présente l'inconvénient d'être sensible au positionnement de la source par rapport au détecteur. De plus, l'image de la source apparaît directement sur le détecteur.

Le système peut comporter une unité de stockage pour chaque voie de mesure ou chaque voie de référence pour y introduire des échantillons à mesurer ou à comparer en transmission.

De manière non limitative, chaque unité de stockage peut comporter une cuvette transparente dans laquelle est placé un fluide à illuminer par un rayonnement lumineux.

Le système peut comporter une cuvette 22 de mesure pour chaque voie de mesure et, de manière optionnelle, une cuvette 23 de référence pour chaque voie de référence.

Chaque cuvette 22 de mesure est destinée à recevoir un fluide à étudier contenant un solvant, des réactifs et un composé à analyser.

Chaque cuvette 23 de référence est destinée à recevoir une solution contenant uniquement le solvant et les réactifs, de manière à servir de solution de référence.

Chaque unité de stockage est positionnée en dehors de l'enveloppe 210, devant la sortie d'une fibre optique 213 distincte de manière à recevoir un faisceau lumineux distinct. L'ensemble est positionné dans un boîtier opaque externe 27 qui assure le noir à l'intérieur de cette enceinte de mesure.

Le système comporte avantageusement au moins un détecteur 24 pour chaque voie de mesure et chaque voie de référence.

Chaque détecteur peut être formé d'une photodiode 240 ou barrette de photodiodes, amplifiée ou non, destinée à convertir un signal lumineux reçu en un courant électrique qui pourra être transformé en tension pour la mesure.

Chaque détecteur 24 peut être un détecteur 241 à deux dimensions de type CMOS ou CCD.

En utilisant un ou plusieurs détecteurs de type CCD ou CMOS permettant de recueillir un signal lumineux non ponctuel, il est possible d'obtenir une réponse angulaire au signal lumineux transmis à travers les unités de stockage. En jouant sur l'ouverture numérique de chaque fibre optique 213, il est possible d'accéder à la variabilité angulaire du signal transmis, ceci sans aucun mouvement de la source lumineuse, des détecteurs ou des unités de stockage.

Le fait d'utiliser une fibre optique 213 permet de positionner le détecteur en face de la fibre optique et de satisfaire aux objectifs demandés, notamment une fidélité et répétabilité de ± 0.1% entre 2% et 100%, sans changement des caractéristiques d'émission et de détection, aussi bien électronique qu'optique avec une diode électroluminescente émettant dans le vert (par exemple une diode électroluminescente référencée 545-01 et vendue par la société Roithner). Cette fidélité et cette répétabilité représentent un avantage particulier de l'invention. Elles sont assurées en statique mais aussi temporellement grâce à la normalisation permanente du signal optique qui supprime de nombreuses variations liées à la source optique. Cette normalisation ne nécessite pas de réglages optiques et n'utilise pas de composants optiques passifs à l'exception de 2 fibres optiques courtes (de longueur inférieure à 10 mm). Des transmissions 100 à 10000 plus faibles peuvent être détectées en introduisant des densités optiques sur la voie de référence, en diminuant l'amplification électronique sur la voie de référence et en augmentant la puissance incidente et l'amplification sur les détecteurs employés.

Le système peut comporter un diaphragme positionné devant chaque détecteur 24.

Chaque unité de stockage est intercalée entre la sortie d'une fibre optique 213 et un détecteur 24 distinct.

Le système peut comporter un diffuseur 25 optique positionné entre la sortie de chaque fibre optique 213 et l'unité de stockage. Ce diffuseur sera translucide aux longueurs d'onde de la source lumineuse employée. Chaque diffuseur 25 est destiné à uniformiser la lumière incidente qui arrive sur l'échantillon à analyser présent dans la cuvette de l'unité de stockage.

Le système peut comporter une unité de détection 26 à laquelle est connecté chacun des détecteurs. Une détection synchrone peut être ajoutée dans l'unité de détection 26 pour éliminer une partie de la lumière parasite en modulant la fréquence d'éclairage de la source 20.

L'unité de détection 26 est configurée pour recueillir les signaux électriques générés par chaque détecteur 24. Cette unité de détection 26 peut comporter un ou plusieurs dispositifs de traitement de signal, tels que par exemple filtre, amplificateur, comparateur et un microcontrôleur... Cette unité de détection 26 permet d'équilibrer les voies optiques pour minimiser les traitements et maximiser la fidélité. Elle peut également contrôler les séquençages des éclairements assurés par les diodes, des mesures assurées par les détecteurs et gérer des paramètres de détection synchrone...

Le système peut comporter au moins une carte électronique 28 sur laquelle sont soudés les détecteurs 24, la source lumineuse 20 composée d'une ou plusieurs diodes électroluminescentes et éventuellement les composants de l'unité de détection 26.

Le boîtier 27 du système est destiné à loger au moins son dispositif optique, les unités de stockage nécessaires et les détecteurs 24 nécessaires.

Le système peut comporter un connecteur, par exemple de type USB ou une liaison sans fil pour relier l'unité de détection 26 à un ordinateur afin d'y transférer les données de mesure.

Le système est notamment adapté pour mesurer le taux d'hémoglobine dans le sang mais il peut être utilisable pour d'autres mesures d'atténuation et/ou de transmission.

Pour le taux d'hémoglobine, il comporte nécessairement une voie de mesure en transmission (en l'occurrence autour de 540 nm avec une largeur à mi-hauteur voisine de 40 nm) qui est complétée par une voie de mesure et de référence à une autre longueur d'onde (en l'occurrence autour de 750 nm) en transmission pour s'assurer que la turbidité de la solution sanguine lysée et colorée par l'introduction d'un ou plusieurs additifs pour transformer l'ensemble des hémoglobines en solution absorbante au voisinage de 540 nm, ne perturbe la mesure en transmission. Les sources de longueurs d'onde utilisées sont alors des diodes électroluminescentes filtrées optiquement ou non et les détecteurs sont des photodiodes avec une amplification interne intégrée, dont le résultat peut être également amplifié de façon externe.

Les détecteurs choisis sont le plus linéaires possibles pour que le rapport des tensions ou des courants des détecteurs dépendent le moins possible des fluctuations de la source, de l'environnement extérieur, des détecteurs, et pour accroître la répétabilité et la fidélité du dispositif proposé.)

Le système est également compatible avec l'utilisation de circuit microfluidique pour être incorporé dans un dispositif où d'autres paramètres sanguins pourront être mesurés (taux d'hématocrite, créatinine, potassium, ...).

Le système est également compatible pour analyser en statique ou continu des concentrations de substances (métaux, ...) contenus dans des liquides. Des analyses de variations de concentrations de ces mêmes substances peuvent être mesurées. Il est possible de jouer sur l'épaisseur traversée pour s'adapter à la gamme de concentration souhaitée.

Le système proposé est également compatible avec la mesure de densité optique en statique et en cinétique pour étudier des réactions d'agrégations et d'agglutinations par exemple dans des systèmes de diagnostics ou de dosages anticorps-antigènes. Dans ces systèmes, la mesure en transmission peut s'effectuer en incidence normale ou à un autre angle (néphélométrie), voir sur plusieurs angles de façon simultanée en utilisant un détecteur linéaire (par exemple une barrette de CCD).

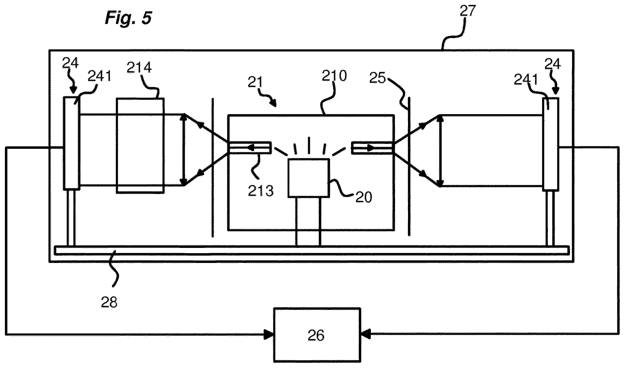

Le système peut être configuré pour réaliser une cartographie de transmission d'un échantillon selon le schéma représenté sur la figure 5. Il s'agit alors de mesurer le signal angulaire transmis à travers l'échantillon à l'aide d'un premier détecteur de type CCD ou CMOS sur une voie et de laisser le signal émis sur la voie de référence aller vers le deuxième détecteur. L'unité de détection 26 récupère les deux signaux en parallèle pour effectuer la cartographie en transmission.

L'un des objectifs du système étant d'obtenir la meilleure fidélité et répétabilité photométrique possible en transmission, certains paramètres pourront être adaptés, notamment :
- La mesure des offsets des détecteurs ;
- La stabilité des offsets des courants noirs des détecteurs ;
- La stabilité des sources de tensions et/ou de courants des composants électroniques ;
- La suppression physique (capot/cache) des diverses sources lumières parasites ;
- L'utilisation de détection synchrone pour supprimer les sources de lumière parasite et les offsets continus des détecteurs dont l'origine peut-être de la lumière parasite, les courants noirs des détecteurs, les variations associées aux variations thermiques des détecteurs ;
- L'utilisation de pilotes de courant ou assimilé pour piloter de façon stable les diodes électroluminescentes ;

Le système de l'invention présente un certain nombre d'avantages, parmi lesquels :
- Il est particulièrement compact et d'un coût peu élevé, ce qui permet de l'utiliser pour des applications et des environnements inaccessibles jusqu'à maintenant (on peut choisir de détruire le dispositif, de ne pas le récupérer : application marine, pétrolière, nucléaire, atmosphère nocive pour l'homme, vulcanologie, climatologie,...);
- Il permet une reproductibilité dans les mesures, le rendant particulièrement fiable et utilisable par exemple pour des applications médicales individualisées, des contrôles environnementaux ou pour obtenir des paramètres optiques pour de la modélisation fine ;
- Le système peut suivre la transmission à travers plusieurs échantillons en même temps en utilisant un nombre de voies de mesure adapté et dans les mêmes conditions expérimentales (température, hygrométrie...) pour toutes les voies et en prenant en compte les fluctuations des sources lumineuses employées ;
- L'utilisation des fibres optiques permet :
   ∘ d'absorber les variations de positionnement de la source lumineuse d'un dispositif à l'autre ;
   ∘ de maîtriser la sortie de la lumière issue de la source lorsque cette dernière est composée de plusieurs diodes électroluminescentes émettant à des longueurs d'onde différentes ;
   ∘ de supprimer l'effet sténopé et donc d'améliorer l'uniformité d'éclairement sur chaque unité de stockage et sur chaque détecteur et de faciliter l'alignement entre la source (sortie de la fibre) et le détecteur ;
   ∘ de contrôler aisément le flux lumineux à délivrer dans chaque voie de mesure et de référence, en jouant sur les distances fibres-unité de stockage-détecteur et éventuellement en ajoutant des sources de lumière dans l'enveloppe 210 ;

Quelques remarques complémentaires au sujet du système de l'invention et de son fonctionnement :
Comme dit précédemment, il est préférable que les détecteurs utilisés soit le plus linéaire possible dans la zone de mesure. En effet, pour augmenter la précision des mesures réalisées, on mesure le rapport quasi-simultané entre les détecteurs des voies de mesure et de la référence. Pour cela, le plus simple est bien entendu d'utiliser une détection synchrone pour supprimer les offsets continus respectifs des courants noirs des détecteurs.

De manière générale, l'objectif du système est d'obtenir la meilleure répétabilité photométrique possible en transmission. La précision est secondaire. Donc si les offsets et les courants ne varient pas, ils n'ont pas d'influence sur la répétabilité.

Comme indiqué précédemment, le système ne comporte avantageusement pas de :
- Miroirs ;
- Lentilles ;
- Prismes ;
- D'éléments mobiles ;
- De séparateur de faisceau ("beam splitter" en anglais) ;

Le système ne demande avantageusement pas d'alignement optique car il est aligné par construction mécanique.

Le système permet avantageusement une normalisation permanente qui autorise des mesures en statique et en cinétique d'une fidélité et d'une reproductibilité remarquable, conséquence de l'absence de composants optiques passifs à l'exception de fibre optiques de courte distance (typiquement 10 mm) et d'une absence de réglages optiques avant ou après sa conception. Les seuls réglages sont des réglages de normalisation électronique pour s'adapter à l'emplacement et à la réponse des différents composants (source, fibre et détecteurs).

## Revendications

1. Système spectrophotomètre, **caractérisé en ce qu'**il comporte :
- Un boîtier (27) opaque,
- Au moins une diode électroluminescente configurée pour émettre un rayonnement lumineux diffusé ou non et dit natif, à une première longueur d'onde, Ledit boîtier (27) renfermant :
- Un dispositif optique (21) qui comporte :
∘ Une enveloppe (210) opaque à toutes les longueurs d'onde, délimitant un espace interne (211) fermé par rapport à un espace externe, ladite au moins une diode électroluminescente étant placée dans ledit espace interne (211) pour émettre ledit rayonnement lumineux natif dans ledit espace interne,
∘ Une première ouverture et une deuxième ouverture réalisées à travers ladite enveloppe opaque,
∘ Une première fibre optique (213) connectée sur ladite première ouverture et une deuxième fibre optique (213) connectée sur ladite deuxième ouverture,
∘ Ladite première fibre optique et ladite deuxième fibre optique comprenant chacune une entrée localisée dans ledit espace interne (211) et une sortie débouchant dans ledit espace externe, et étant agencée pour récupérer une partie du rayonnement lumineux natif émis par ladite au moins une diode électroluminescente, sans dispositif optique intermédiaire, et pour guider sans interruption respectivement un premier faisceau lumineux et un deuxième faisceau lumineux, issus chacun directement dudit rayonnement lumineux natif, de l'espace interne vers l'espace externe,
- Un premier détecteur (24) placé pour recevoir le premier faisceau,
- Un deuxième détecteur (24) placé pour recevoir le deuxième faisceau.

2. Système selon la revendication 1, **caractérisé en ce qu'**il comporte une première unité de stockage intercalée entre ladite sortie de la première fibre optique et le premier détecteur (24) pour recevoir ledit premier faisceau et une deuxième unité de stockage intercalée entre ladite sortie de la deuxième fibre optique et le deuxième détecteur (24) pour recevoir ledit deuxième faisceau.

3. Système selon la revendication 1 ou 2, **caractérisé en ce que** la première fibre optique et la deuxième fibre optique sont agencés pour présenter chacune un axe d'entrée, défini par la normale à leur face d'entrée, et **en ce que** l'axe d'entrée de la première fibre et l'axe d'entrée de la deuxième fibre ne sont pas confondus.

4. Système selon l'une des revendications 1 à 3, **caractérisé en ce qu'**il comporte un diffuseur (25) optique positionné entre la sortie de chaque fibre optique (213) et l'unité de stockage.

5. Système selon l'une des revendications 1 à 4, **caractérisé en ce que** chaque détecteur (24) comporte au moins une photodiode (240).

6. Système selon l'une des revendications 1 à 5, **caractérisé en ce que** chaque détecteur est configuré et agencé pour capter une transmission angulaire à travers l'unité de stockage.

7. Système selon la revendication 6, **caractérisé en ce que** chaque détecteur est un détecteur (241) de type CMOS ou CCD.

8. Système selon la revendication 1, **caractérisé en ce qu'**il comporte des moyens de diffusion agencés au moins partiellement autour de ladite source lumineuse pour diffuser ledit rayonnement lumineux.

9. Système selon la revendication 8, **caractérisé en ce que** lesdits moyens de diffusion sont réalisés par dépolissage du capot transparent de chaque diode électroluminescente.

10. Système selon la revendication 1, **caractérisé en ce qu'**il comporte une carte électronique sur laquelle est connectée chaque diode électroluminescente de la source lumineuse (20) et chaque détecteur (24).

11. Système selon l'une des revendications 1 à 10, **caractérisé en ce qu'**il comporte une unité de détection (26) à laquelle est connecté chaque détecteur (24).

12. Système selon l'une des revendications 1 à 11, **caractérisé en ce que** l'enveloppe (210) est de forme parallélépipédique.

13. Système selon l'une des revendications 1 à 12, **caractérisé en ce qu'**il comporte au moins une voie de mesure et une voie de référence.

14. Utilisation du système tel que défini dans l'une des revendications 1 à 13 pour réaliser des mesures d'absorption ou de transmission optique à travers un échantillon à analyser placé dans une unité de stockage intercalée entre ladite sortie de la première fibre optique et le premier détecteur (24) pour recevoir ledit premier faisceau.

## Patentansprüche

1. Spektralfotometersystem, **dadurch gekennzeichnet, dass** es umfasst:
- Ein opakes Gehäuse (27);
- Mindestens eine Leuchtdiode, die dazu ausgestaltet ist, eine gestreute oder nicht gestreute und als nativ bezeichnete Lichtstrahlung mit einer ersten Wellenlänge zu emittieren,
Wobei das Gehäuse (27) umschließt:
- Eine optische Vorrichtung (21), die umfasst:
∘ Einen für alle Wellenlängen opaken Mantel (210), der einen gegenüber einem Außenraum abgeschlossenen Innenraum (211) begrenzt, wobei die mindestens eine Leuchtdiode in dem Innenraum (211) angeordnet ist, um die native Lichtstrahlung in den Innenraum zu emittieren,
∘ Eine erste Öffnung und eine zweite Öffnung, die durch den opaken Mantel hindurch ausgeführt sind,
∘ Eine erste optische Faser (213), die an die erste Öffnung angeschlossen ist, und eine zweite optische Faser (213), die an die zweite Öffnung angeschlossen ist,
∘ Wobei die erste optische Faser und die zweite optische Faser jeweils einen Eingang, der in dem Innenraum (211) lokalisiert ist, und einen Ausgang, der in den Außenraum mündet, umfassen und dazu eingerichtet sind, einen Teil der von der mindestens einen Leuchtdiode emittierten nativen Lichtstrahlung, ohne optische Zwischenvorrichtung, zurückzugewinnen und ein erstes Lichtbündel beziehungsweise ein zweites Lichtbündel, die jeweils direkt aus der nativen Lichtstrahlung hervorgegangen sind, ohne Unterbrechung von dem Innenraum zu dem Außenraum zu leiten,
- Einen ersten Detektor (24), der angeordnet ist, um das erste Bündel zu empfangen,
- Einen zweiten Detektor (24), der angeordnet ist, um das zweite Bündel zu empfangen.

2. System nach Anspruch 1, **dadurch gekennzeichnet, dass** es eine erste Speichereinheit umfasst, die zwischen den Ausgang der ersten optischen Faser und den ersten Detektor (24) gesetzt ist, um das erste Bündel zu empfangen, und eine zweite Speichereinheit, die zwischen den Ausgang der zweiten optischen Faser und den zweiten Detektor (24) gesetzt ist, um das zweite Bündel zu empfangen.

3. System nach Anspruch 1 oder 2, **dadurch gekennzeichnet, dass** die erste optische Faser und die zweite optische Faser dazu eingerichtet sind, jeweils eine Eintrittsachse, die durch die Senkrechte zu ihrer Eintrittsfläche definiert ist, aufzuweisen, und dadurch, dass die Eintrittsachse der ersten Faser und die Eintrittsachse der zweiten Faser nicht identisch sind.

4. System nach einem der Ansprüche 1 bis 3, **dadurch gekennzeichnet, dass** es einen optischen Diffusor (25) umfasst, der zwischen dem Ausgang jeder optischen Faser (213) und der Speichereinheit positioniert ist.

5. System nach einem der Ansprüche 1 bis 4, **dadurch gekennzeichnet, dass** jeder Detektor (24) mindestens eine Fotodiode (240) umfasst.

6. System nach einem der Ansprüche 1 bis 5, **dadurch gekennzeichnet, dass** jeder Detektor dazu ausgestaltet und eingerichtet ist, eine Winkeltransmission durch die Speichereinheit hindurch zu erfassen.

7. System nach Anspruch 6, **dadurch gekennzeichnet, dass** jeder Detektor ein Detektor (241) vom Typ CMOS oder CCD ist.

8. System nach Anspruch 1, **dadurch gekennzeichnet, dass** es Diffusionsmittel umfasst, die mindestens teilweise um die Lichtquelle herum eingerichtet sind, um die Lichtstrahlung zu streuen.

9. System nach Anspruch 8, **dadurch gekennzeichnet, dass** die Diffusionsmittel durch Mattieren der transparenten Kappe jeder Leuchtdiode ausgeführt sind.

10. System nach Anspruch 1, **dadurch gekennzeichnet, dass** es eine Elektronikkarte umfasst, an die jede Leuchtdiode der Lichtquelle (20) und jeder Detektor (24) angeschlossen ist.

11. System nach einem der Ansprüche 1 bis 10, **dadurch gekennzeichnet, dass** es eine Detektionseinheit (26) umfasst, an die jeder Detektor (24) angeschlossen ist.

12. System nach einem der Ansprüche 1 bis 11, **dadurch gekennzeichnet, dass** der Mantel (210) parallelepipedisch ist.

13. System nach einem der Ansprüche 1 bis 12, **dadurch gekennzeichnet, dass** es mindestens einen Messkanal und einen Referenzkanal umfasst.

14. Verwendung des wie in einem der Ansprüche 1 bis 13 definierten Systems zum Ausführen von Messungen der Absorption oder optischen Transmission durch eine zu analysierende Probe hindurch, die in einer Speichereinheit angeordnet ist, die zwischen den Ausgang der ersten optischen Faser und den ersten Detektor (24) gesetzt ist, um das erste Bündel zu empfangen.

## Claims

1. Spectrophotometer system, **characterized in that** it comprises:
- an opaque housing (27),
- at least one light-emitting diode configured to emit, at a first wavelength, what is called native light radiation, which is scattered or not scattered,
said housing (27) enclosing:
- an optical device (21) that comprises:
∘ a jacket (210) that is opaque to all wavelengths, defining an internal space (211) that is closed with respect to an external space, said at least one light-emitting diode being placed in said internal space (211) so as to emit said native light radiation into said internal space,
∘ a first aperture and a second aperture, which extend through said opaque jacket,
∘ a first optical fibre (213) connected to said first aperture and a second optical fibre (213) connected to said second aperture,
∘ said first optical fibre and said second optical fibre each comprising an entrance located in said internal space (211) and an exit that opens into said external space, and being arranged to collect some of the native light radiation emitted by said at least one light-emitting diode, without any intermediate optical device, and to guide without interruption a first light beam and a second light beam, respectively, each of which is obtained directly from said native light radiation, from the internal space to the external space,
- a first detector (24) placed to receive the first beam,
- a second detector (24) placed to receive the second beam.

2. System according to Claim 1, **characterized in that** it comprises a first storage unit inserted between said exit of the first optical fibre and the first detector (24) so as to receive said first beam and a second storage unit inserted between said exit of the second optical fibre and the second detector (24) so as to receive said second beam.

3. System according to Claim 1 or 2, **characterized in that** the first optical fibre and the second optical fibre are arranged to each have an entrance axis, defined by the normal to their entrance face, and **in that** the entrance axis of the first fibre and the entrance axis of the second fibre are not coincident.

4. System according to one of Claims 1 to 3, **characterized in that** it comprises an optical diffuser (25) positioned between the exit of each optical fibre (213) and the storage unit.

5. System according to one of Claims 1 to 4, **characterized in that** each detector (24) comprises at least one photodiode (240).

6. System according to one of Claims 1 to 5, **characterized in that** each detector is configured and arranged to sense an angular transmission through the storage unit.

7. System according to Claim 6, **characterized in that** each detector is a CMOS or CCD detector (241).

8. System according to Claim 1, **characterized in that** it comprises scattering means arranged at least partially around said light source so as to scatter said light radiation.

9. System according to Claim 8, **characterized in that** said scattering means are produced by roughening the transparent cover of each light-emitting diode.

10. System according to Claim 1, **characterized in that** it comprises a circuit board to which each light-emitting diode of the light source (20) and each detector (24) is connected.

11. System according to one of Claims 1 to 10, **characterized in that** it comprises a detecting unit (26) to which each detector (24) is connected.

12. System according to one of Claims 1 to 11, **characterized in that** the jacket (210) is of parallelepipedal shape.

13. System according to one of Claims 1 to 12, **characterized in that** it comprises at least one measurement channel and one reference channel.

14. Use of the system such as defined in one of Claims 1 to 13 to carry out measurements of optical absorption or transmission through a sample to be analysed placed in a storage unit inserted between said exit of the first optical fibre and the first detector (24) so as to receive said first beam.
